Europäisches Patentamt

**European Patent Office**

Office européen des brevets

(11) Publication number: **0 067 592**
**A2**

(12) **EUROPEAN PATENT APPLICATION**

(21) Application number: **82302757.8**

(22) Date of filing: **27.05.82**

(51) Int. Cl.³: **C 12 G 3/04**

(30) Priority: **12.06.81 US 273124**
**12.06.81 US 273125**

(43) Date of publication of application:
**22.12.82 Bulletin 82/51**

(84) Designated Contracting States:
**BE DE FR GB IT NL**

(71) Applicant: **NABISCO BRANDS INC.**
**9W. 57th Street**
**New York, N.Y. 10019(US)**

(72) Inventor: **Rose, Lucien C.**
**241 Colonial Drive**
**Fairfield Connecticut 06905(US)**

(72) Inventor: **Harrison, Patrick R.**
**1404 Shippan Point Avenue**
**Stamford Connecticut 06902(US)**

(74) Representative: **Thomas, Roger Tamlyn et al,**
**D. Young & Co. 10 Staple Inn**
**London WC1V 7RD(GB)**

(54) **Cream-based liqueur and process.**

(57) A liqueur is disclosed which contains fresh cream yet remains stable against separation despite an alcohol content of from about 5 to about 25%. According to the disclosed process, cream base and spirit portions are prepared and combined to form a stable product having a pH above about 6.3. The cream base portion is prepared from cream, sugar, an antioxidant, an emulsifier having a hydrophilic/lipophilic balance of less than about 12, a soluble casein salt as an emulsion stabilizer, and flavoring and/or color if desired. The cream base portion can be homogenized prior to blending or the blend of the cream base and spirit portions can be homogenized, to form a stable emulsion wherein the fat globules are reduced in size such that at least 95% are less than 1 micron in diameter, and substantially none are greater than 8 microns in diameter. The spirit portion may be flavored and/or colored as desired.

SBI-130/135

## DESCRIPTION

## CREAM-BASED LIQUEUR AND PROCESS

Technical Field

The present invention relates to a cream-based liqueur and to a process for its preparation.

Sweet, creamy, alcoholic beverages are very popular among consumers; however, they are difficult to produce in commercially-stable form. A number of products are currently available which indicate that they contain natural dairy cream. Some of these are suitably stable -- showing little, if any, fat separation after long periods of storage. Unfortunately, the formulations for these products are secret, and the manner of achieving stability cannot be determined by simple chemical analysis. The number of products on the market might suggest that stability can be easily achieved through known technology, particularly with the help of the companies which manufacture emulsifiers and emulsion stabilizers. Unfortunately, this has not been the case. Through a long series of consultations and testing, numerous emulsifiers and stabilizers were found to be ineffective. It appears that the high alcohol content would cause denaturation in the protein portion of the cream and would, in some way, be involved in agglomeration and separation of the butter fat.

## Background Art

Consulting the literature, it was determined that cream must be homogenized to break down the size of the fat globules to a fairly uniform size of about 1 micron in diameter in non-alcoholic dairy products. The homogenation should produce at least 95% of the fat globules with approximately 1 micron diameters and should leave substantially no fat globules having diameters greater than about 2 microns. The literature also suggested controlling the pH of the product to a level of near neutral in non-alcoholic dairy products. However, even employing these techniques, and the many suggestions from emulsifier and emulsion stabilizer suppliers in an alcoholic dairy product, emulsion stabilities suitable for a commercial product could not be achieved.

One prior art patent, UK 751,900, discusses the preparation of an alcoholic beverage containing alcohol, sugar, and heat-treated milk. This product is quite different than one containing cream, however, because of the much lower fat content employed and the relative ease of stabilizing emulsions with low fat contents. This product, in fact, is said to be stabilized by heat treatment alone -- something which we have found cannot be done when cream is employed.

Thus, there is an absence of teachings in the prior art regarding the effective preparation of a stable alcoholic beverage containing fresh dairy cream.

## Disclosure of the Invention

Accordingly, it is an object of at least the preferred embodiments of the present invention to provide a cream-based liqueur having superior stability and a process for its preparation.

It is a more specific object of at least the preferred embodiments of the present invention to provide a cream-based liqueur having an alcohol content of from about 5 to about 25% and containing a high proportion of natural dairy cream having a high

The present invention provides a liqueur based on natural dairy cream, having an alcohol content of from about 5 to about 25% and a process for preparing it. In its broad aspects, the liqueur is in the form of a stable emulsion generally having a pH above about 6.3 wherein at least about 95% of the fat globules from the cream have diameters of less than 1 micron and substantially none have diameters greater than 8 microns, and comprises: cream, ethanol, sugar, an emulsifier having a hydrophilic/lipophilic balance of less than about 12, and a water-soluble casein salt as an emulsion stabilizer, wherein the amounts of the emulsifier and stabilizer together are effective to provide a stable emulsion.

In its broad aspects, the process comprises preparing a cream base portion comprising cream, sugar, an emulsifier having a hydrophilic/lipophilic balance of less than about 12, and a water-soluble casein salt as an emulsion stabilizer; preparing a spirit portion comprising ethanol; blending the cream base and spirit portions; and homogenizing the ingredients of at least the cream base portion under conditions effective to reduce the size of the fat globules in the cream such that 95% have diameters less than 1 micron and substantially none have diameters greater than 8 microns and to provide a about 6.3. Preferred aspect of the invention will now be described.

The cream-based liqueur of the present invention is generally stable against phase separation between the fat and the aqueous portions for periods in excess of six months. Reference to a stable emulsion in this description, then, is defined to mean stable for at least six months, and preferably for a period of greater than two years. Products which do not meet this rigorous standard, are not practical commercially.

The cream employed in the liqueur is preferably heavy cream from dairy cows. The most preferred creams are those having fat contents of at least about 35% by weight of the cream. The cream should be fresh as determined by its acidity. Preferably, the cream will have an acidity of 0.10% or less when a 9-gram sample is titrated with 0.1 normal sodium hydroxide to a pH end point of from about 8.3 to about 8.6, expressing acidity in terms of mililiters of sodium hydroxide consumed multiplied by 0.1. Where the cream is more acid than this standard, inherent fat separation becomes more likely. Preferably, the cream will comprise at least about 3% by volume of the liqueur and can comprise up to about 50% of its volume. Most preferably, the cream will comprise from about 35 to 45% of the volume.

The alcohol content of the liqueur of from about 5 to 25% by volume, preferably from about 15 to 20%, can be obtained from any suitable source or blend of sources of ethanol having a sufficiently high concentration of ethanol which would be compatible with the remainder of the ingredients. For example, the ethanol can be added as grain neutral spirits or other distilled spirits. Preferably, at least a portion will be added as a distilled spirit selected from the group consisting of vodka, whiskey, rum, brandy and cognac. In one especially preferred embodiment, the liqueur is given an Irish whiskey flavor by the use of a blend of Irish whiskey and distilled neutral spirits. A blend can contain, for example, on a proof gallon basis, any proportion of neutral spirits and Irish whiskey. One preferred blend will contain from 25 to 60% Irish whiskey. It is preferred to employ a spirit portion having a relatively high proof, on the order of above about 100°, and preferably above about 140°.

The source of the alcohol can also be a source of flavor and color. If desired, this may be the sole color and flavor added, or other flavors and/or colors can be employed, such as vanilla extract, vanillin, and other non-toxic flavorants. Some flavorants such as vanilla extract impart a pleasing color. These materials may be employed in any desired amount to obtain the desired effect.

In addition to these basic materials, the liqueur must also contain sugar. The sugar can be employed in the form of sucrose, maltose, dextrose, lactose, corn syrup, corn syrup solids, invert sugar, high fructose corn syrup, and the like. For ease of blending, it is preferred to employ the sugars in the form of aqueous syrups. A preferred form of sugar is a sucrose syrup. The sugar solids content of the product will be within the range of from about 2½% to about 50% by weight, based on the total volume of the liqueur, and will preferably be within the range of from about 10% to about 20% on the same basis.

A stabilizing pH value for each of the components and the complete products can be achieved by addition of a suitable acid or base to reach a pH over about 6.3. The components being typically acid, a base such as sodium hydroxide is added to adjust the pH to approximate neutrality, that is, within a range of from about 6.7 to about 7.2. Such pH adjustment provides additional long-term stability and is novel in alcoholic dairy beverage products.

To provide a stable emulsion in a product of this type, it has been found that, in addition to homogenizing the cream to provide uniformly small fat globules and adjusting the pH to a level of above about 6.3, it is important to employ a suitable emulsifier and emulsion stabilizer combination. We have found, despite many contrary indications in the prior art and from commercial suppliers of emulsifiers, that the emulsifier should have a hydrophilic/lipophilic balance of less than about 12. No literature references concerning the use of emulsifiers in alcoholic dairy products have been found. References to non-alcoholic dairy products indicated that emulsifiers having a hydrophilic/ lipophilic balance of about 12 would be suitable. Preferred emulsifiers have hydrophilic/lipophilic balances of within the range of from 5 to 10, and most preferably from about 5.7 to about 6.0. There are many possible emulsifiers and mixtures of emulsifiers which have this desirable balance between their affinity for water and fat, among which are blends of a predominantly hydrophilic emulsifier with a predominantly lipophilic emulsifier.

Among the suitable hydrophilic emulsifiers are those known as polysorbate 60, polysorbate 65, and polysorbate 80. These emulsifiers are generically known as polyoxyethylene (20) sorbitan monostearate, polyoxyethylene (20) sorbitan tristearate and polyoxyethylene (20) sorbitan monooleate, respectively. Among these, the polyoxyethylene (20) sorbitan monostearate is presently the most preferred.

Among the suitable lipophilic emulsifiers are mixed fatty acid monoglycerides; mixed fatty acid diglycerides; mixtures of fatty acid mono- and diglycerides; lipophilic polyglycerol esters; glycerol esters, such as glycerol monooleate, glycerol dioleate, glycerol monostearate, glycerol distearate, glycerol monopalmitate and glycerol dipalmitate, other glycerol esters, and sorbitan esters such as sorbitan monostearate, sorbitan trioleate, sorbitan tripalmitate, sorbitan tristearate, and sorbitan sesquioleate.

The most preferred among the lipophilic emulsifiers is the sorbitan monostearate. This is preferrably employed in combination with the polyoxyethylene (20) sorbitan monostearate to provide an overall emulsifier combination which has a hydrophilic/lipophilic balance of within the preferred range. We make no claim that a stable emulsion cannot be formed without the use of emulsifiers having the noted hydrophilic/lipophilic balance. We do point out, however, that the discovery that such emulsifiers will work is apparently novel to the known state of the art.

We have also found that the use of a water-soluble casein salt will effectively retard separation of the emulsion and provide a desirable degree of stability and creaminess to the liqueur despite its being diluted with spirits and water. While potassium caseinate and other soluble casein salts can be employed, it is preferred to employ sodium caseinate because of its ready commercial availablility and high degree of effectiveness. The sodium caseinate most preferred is that obtained from fresh curd.

The effect of the casein salt upon the liqueur extends beyond simple thickening. We have noticed that it provides a significant improvement in the perceived creaminess of the mouthfeel. Again, with the caseinate emulsion stabilizer, we make no claim that this is the only class of materials which can be employed; however, we believe that it is surprising that these proteinacious materials are effective in stabilizing the cream-based emulsions against the normally destabilizing effect of the alcohol.

The emulsifier and the stabilizer will both be employed in amounts which are effective to perform their respective functions of emulsification and stabilization. In addition, they must be employed in the correct relative amounts. Typically, the emulsifier will be employed at levels from about 0.05% to about 5%, preferably from about 0.1% to about 1.0%, of the weight of the total composition. In conjunction with this, the stabilizer may be employed in amounts of from about 1.0% to about 6.0%, preferably from about 1.5% to about 3.0%, the percentage being based upon the dry weight of the stabilizer as part of the total composition.

In addition to these materials, an antioxidant is also preferably incorporated into the liqueur in an amount which is effective to stabilize the fat content against oxidation. Any of the antioxidants effective for this purpose can be employed, but preferably, the antioxidant will be one of those typically employed in products containing butterfat. Among the suitable antioxidants are butylated hydroxyanisole (BHA), butylated hydroxytoluene (BHT), nordihydroguaiaretic acid (NDGA), and tertiarybutylhydroquinone (TBHQ), n-propyl gallate, and the several tocopherols. Preferred among these is butylated hydroxyanisole (BHA).

In addition to these materials, the liqueur may incorporate a preservative which is effective in protecting the product from biochemical degradation such as by bacterial and/or enzymatic action. Typically, the level of use will be in accordance with effectiveness and Food and Drug Administration limitations. Among suitable preservatives are sodium benzoate, potassium sorbate, any of the FDA-approved parabens, and the like.

The above ingredients are preferably blended into a separate cream-base portion and a spirits portion prior to blending the two portions to form the final product. It is desirable that each of the portions be pH adjusted, such as by the addition of sodium hydroxide, if necessary, to obtain a pH above about 6.3. This will assure a pH within the final product of above about 6.3. While the pH of the individual portions and the total product can be substantially above 7.0, if desired, it is preferred to maintain the pH within the range of from about 6.7 to about 7.2.

To prepare the cream base portion, the cream, sugar, and emulsifier are preferably first blended at a slightly elevated temperature, for example, from about 100 to about 190°F, typically about 140°F. To the resulting blend, the casein salt emulsion stabilizer is then added with high speed mechanical agitation to achieve dispersion and hydration. Then the emulsifier, antioxidant, preservative, and flavorings and/or colorings if desired, are preferably mixed together and added to the blending vat. After complete dissolution of all the ingredients has been obtained, the pH of the blend is checked and adjusted such as, for example, with 5 normal sodium hydroxide as necessary to achieve the desired pH. It is noted that while the cream has a high buffering capacity, some ingredients such as high fructose corn syrup have a relatively low pH which must be raised.

The substantially neutral blend of the ingredients for the cream-base portion is pasteurized and can then be homogenized as a separate portion or after blending with the spirit portion. The homogenization is conducted under conditions effective to reduce at least 95% of the fat globules therein to a diameter of about 1 micron or less and to substantially free the blend of globules having diameters in excess of 8 microns. Preferably, substantially all globules should be reduced to 2 microns or less. Typical homogenization temperatures will be within the range of from about 100° to about 190°F, and preferably within the range of from about 155° to about 190°F. Any of the homogenizers which are suitable for the purpose can be employed. Typically employed are two-stage dairy homogenizers such as the Manton-Gaulin two-stage homogenizer or the Cherry Burrel two-stage homogenizer. Typically, the first stage pressure will be within the range of from about 1000 psig to about 3500 psig, preferably about 2500 psig, and the second stage pressure will be within the range of from about 0 psig to about 1500 psig, preferably about 500 psig.

If homogenized separately, the cream-base portion is cooled after homogenization to a temperature of less than about 50°F, typically about 40°F, in accordance with good dairy plant practice for holding prior to blending with the spirits portion. It is preferred that the cream base portion not be held for periods of time substantially in excess of about 4 hours prior to blending.

To prepare the spirits portion, the source of alcohol, such as a blend of neutral spirits and Irish whiskey having a proof from 100° to 160°, preferably on the order of about 154°, is employed to dissolve the water- and alcohol-soluble flavorants and/or emulsifiers and colorants, which it may be desired to employ. Also added to the spirits portion is the majority of any water which may be desired to add to adjust proof. Where water is employed, it is preferably demineralized. Again, here as with the cream-base portion, the pH of the spirits portion may be adjusted if necessary to bring it to the preferred range. Typically, Irish whiskey will be somewhat acid and require the addition of a base such as sodium hydroxide. The spirits portion should be filtered through a suitable filter such as a plate and frame filter containing Scott SG pads or equivalent to remove any particulates.

- 12 -

To combine the cream base portion and the spirits portion, the two portions are simply blended such as by mechanical agitation for a period of time sufficient to achieve homogeneity. And, where the cream base portion has not been separately homogenized, the blend is homogenized. Coincidental with the blending of the two portions, an additional minor amount of water can be added to provide the final proof adjustment. Blending should be done under conditions which prevent an excess of air to be incorporated within the product. Preferably, the liqueur will exhibit a specific gravity of about 1.00 to about 1.15. The final liqueur can then be transferred to a closed bottling tank where it can be held for a period of up to about 5 days prior to bottling.

Best Mode for Carrying Out the Invention

The following examples are presented for the purpose of further illustrating and explaining the present invention and to provide a description of the best mode presently contemplated for carrying it out. These examples are not meant to be limiting in any regard. All parts and percentages are by weight unless otherwise indicated.

EXAMPLE I

According to this example, a cream-based liqueur flavored with Irish whiskey is prepared by blending a cream base portion with a spirits portion. To prepare the cream base portion, the following ingredients are combined as set forth below the table:

Cream Base Portion

| | Ingredient | Amount |
|---|---|---|
| 1. | Heavy cream, 40% milkfat | 410 gallons |
| 2. | High fructose corn syrup (Isomerose 100, 42% fructose, 72% solids, Standard Brands Inc.) | 205 gallons |
| 3. | Emulsifiers: Sorbitan monostearate (Capmul S, Capital City Products), and Polysorbate 60 (Capmul POE-S, Capital City Products), at approximately 9:1 ratio | 41.7 lbs. |
| 4. | Sodium caseinate (90% protein basis) (Clofine Dairy Prod. Inc.) | 104 lbs. |
| 5. | Sodium hydroxide (approximate to pH 6.8) 5-normal USP | 3.0 liters |
| 6. | Butylated hydroxyanisole (BHA) | 120 grams |
| | | 632 gallons |

The cream (#1), corn syrup (#2), emulsifier (#3) and BHA (#6) are combined in a jacketed stainless steel vat and heated to 140°F. A sufficient quantity of the heated mix, is pumped to a Likwifier high speed blending vat, to dissolve the sodium caseinate (#4). The mix is then pumped to a blending tank for pH adjustment. Sufficient 5N-NaOH (#5) is added to bring the mix to pH 6.8. The resulting mix is pasteurized at 190°F for 27 seconds (hold tube dwell time). The pasteurized mix is homogenized as it enters the regenerator section of the heat exchanger prior to entering the cooling section. Sufficient pressure, (500 psig 2nd stage, 2500 psig 1st stage), is employed in the homogenizer to yield a uniform 1 micron diameter fat globule size. The homogenization temperature is between 155° to 190°F, and the product is then cooled to less than 40°F and transferred cold (30°F to 40°F) for blending with the spirits portion.

The spirits portion is then prepared from the following ingredients and blended as set forth in the following table:

| | Ingredients | Amount |
|---|---|---|
| 1. | whiskey 132° | 257.6 gallons |
| 2. | Flavoring | 20 gallons |
| 3. | Water | 89 gallons |
| 4. | Sodium hydroxide | 1.4 gallons |
| | | 368 gallons |

The whiskey (#1), flavoring (#2) and a portion of water (#3) are added in that order and mixed thoroughly. The remaining demineralized water is added and the pH is adjusted to 7.0 with sodium hydroxide (#4). The preparation of the spirits portion is completed by filtering the resulting blend through a Scott SG filter pad.

The cream-base portion, which has been maintained at a temperature of less than 50°F since preparation, is blended with the spirits portion and a minor amount of water to adjust the proof to final proof of 34°. After finalizing blending, the finished product is held in a closed bottling tank and is then bottled.

## EXAMPLE II

According to this example, a cream-based liqueur flavored with Irish whiskey is prepared by blending a cream base portion with a spirits portion. To prepare the cream base portion, the following ingredients are combined as set forth below the table:

Cream Base Portion

| Ingredient | Amount |
|---|---|
| 1. Heavy cream, 40% milkfat | 13.44 liters |
| 2. Sucrose syrup (67.5° Brix). | 7.08 liters |
| 3. Emulsifiers:<br>    Sorbitan monostearate (Capmul S,<br>    Capital City Products), and<br>    Polysorbate 60 (Capmul POE-S, Capital<br>    City Products), at approximately 9:1 ratio | 163.9 grams |
| 4. Sodium caseinate (90% protein basis)<br>    (Clofine Dairy Prod. Inc.) | 830 grams |
| 5. Sodium hydroxide (approximate to<br>    pH 6.8) 5-normal USP | as need to pH 6.8 |
| 6. Butylated hydroxyanisole (BHA) | 1.05 gram |

The cream (#1) and sugar syrup (#2) are combined in a Groen steam kettle and heated to about 140°F. After the temperature of 140°F has been attained, the emulsifier (#3), BHA (#6), and a sufficient quantity of the heated mix, is added to a Waring Blendor, to dissolve the sodium caseinate (#4). The mix is then pumped to a blending tank for pH adjustment. Sufficient 5N-NaOH (#5) is added to bring the mix to pH 6.8. The cream base portion is then cooled to less than 40°F and transferred cold (30°F to 40°F) for blending with the spirits portion.

The spirits portion is then prepared from the following ingredients and blended as set forth in the following table:

| | Ingredients | Amount |
|---|---|---|
| 1. | whiskey 132° | 3.150 liters |
| 2. | Flavoring | 0.245 liters |
| 3. | Water | 1.088 liters |
| 4. | Sodium hydroxide | 0.017 liters |
| | | 4.500 liters |

The whiskey (#1), flavoring (#2) and a portion of water (#3) are added in that order and mixed thoroughly. The remaining demineralized water is added and the pH is adjusted to 7.0 with sodium hydroxide (#4). The preparation of the spirits portion is completed by filtering the resulting blend through a Scott SG filter pad.

The cream-base portion, which has been maintained at a temperature of less than 50°F since preparation, is blended with the spirits portion and a minor amount of water to adjust the proof to final proof of 34°. After finalizing blending, the resulting blend is pasteurized at 190°F for 27 seconds (hold tube dwell time). The pasteurized mix is homogenized as it enters the regenerator section of the heat exchanger prior to entering the cooling section. Sufficient pressure, (500 psig 2nd stage, 3500 psig 1st stage), is employed in the homogenizer to yield a uniform 1 micron diameter fat globule size. The homogenization temperature is between 155° to 190°F. The finished product is held in a closed bottling tank and is then bottled.

The above description is for the purpose of teaching the person of ordinary skill in the art how to practice the invention. It is not intended to describe in detail each and every modification and variation of the invention which will become apparent to the skilled worker upon reading. It is intended, however, to include all such modifications and variations within the scope of the present invention.

0067592

- 18 -

<u>CLAIMS</u>:

1. A liqueur comprising natural dairy cream, ethanol in an amount of from about 5 to about 25% by volume, sugar and emulsifier, characterized in that: the liqueur is in the form of a stable emulsion wherein at least about 95% of the fat globules from the cream have diameters of less than 1 micron and substantially none have diameters greater than 8 microns; the emulsifier has a hydrophilic/lipophilic balance of less than about 12; and the liqueur futher comprises a water-soluble casein salt as an emulsion stabilizer; wherein the amounts of the emulsifier and stabilizer together are effective to provide a stable emulsion.

2. A liqueur according to Claim 1 wherein the alcohol content is within the range of from 15 to 20%.

3. A liqueur according to Claim 1 or 2 wherein the cream has a fat content of at least 35% by weight and comprises at least 3% by volume of the liqueur.

4. A liqueur according to any preceding Claim wherein the cream comprises from 35 to 45% by volume.

5. A liqueur according to any preceding Claim wherein the sugar content of the liqueur is at least 2½% by weight of the liqueur.

6. A liqueur according to Claim 5 wherein the sugar content is within the range of from 10 to 20%.

7. A liqueur according to any preceding Claim wherein the sugar comprises sucrose, high fructose corn syrup, or a combination of these.

8. A liqueur according to any preceding Claim wherein the pH is from 6.3 to 7.2

9. A liqueur according to any preceding Claim wherein the water-soluble casein salt comprises sodium caseinate.

10. A liqueur according to any preceding Claim wherein substantially all of the fat globules have diameters of 2 microns and less.

11. A liqueur according to any preceding Claim which exhibits a specific gravity of about 1.00 to about 1.15.

12. A liqueur according to any preceding Claim wherein the emulsifier comprises a combination of sorbitan monostearate and polyoxyethylene (20) sorbitan monostearate.

13. A liqueur according to any preceding Claim wherein the emulsifier has a hydrophilic/lipophilic balance of from about 5.7 to about 6.0.

14. A liqueur according to any preceding Claim which further comprises flavoring.

15. A liqueur according to any preceding Claim which further comprises coloring.

16. A liqueur according to any preceding Claim which further comprises an antioxidant.

17. A liqueur according to any preceding Claim which further comprises a preservative.

18. A liqueur according to any preceding Claim wherein at least a portion of the ethanol is added as a distilled spirit selected from the group consisting of vodka, whiskey, rum, brandy and cognac.

19. A process for preparing a liqueur based on natural dairy cream and having an alcohol content of from about 5 to about 25% by volume, which comprises:
preparing a cream base portion comprising cream, sugar, an emulsifier having a hydrophilic/lipophilic balance of less than about 12, and a water-soluble casein salt as an emulsion stabilizer;
preparing a spirit portion comprising ethanol;
blending the cream base and spirit portions; and
homogenizing the ingredients of at least the cream base portion under conditions effective to reduce the size of the fat globules in the cream such that 95% have diameters less than 1 micron and substantially none have diameters greater than 8 microns and to provide a stable emulsion;
the final product having a pH of above about 6.3.

20. A process according to Claim 20 wherein the cream base portion is prepared by homogenizing at a temperature within the range of from about 150° to about 190°F.

21. A process according to Claim 19 or 20 wherein the cream base portion is cooled to below about 40°F after homogenization.

22. A process according to any of Claims 19-21 wherein the cream base portion is homogenized in a two-stage dairy homogenizer using a first stage pressure of about 2500 psig and a second stage pressure of about 500 psig.

23. A process according to any of Claims 19-22 wherein the pH of both portions is above about 6.3 prior to blending them together.

24. A process according to any of Claims 19-23 wherein the cream has a fat content of at least 35% by weight and comprises at least 3% by weight of the liqueur.

25. A process according to any of Claims 19-24 wherein the sugar comprises sucrose, high fructose corn syrup, or a combination of these.

26. A process according to any of Claims 19-25 wherein the emulsifier comprises a combination of sorbitan monostearate and polyoxyethylene (20) sorbitan monostearate having a hydrophilic/lipophilic balance of from about 5.7 to about 6.

27. A process according to any of Claims 19-26 wherein the water soluble casein salt comprises sodium caseinate.

28. A process according to any of Claims 19-27 wherein the liqueur exhibits a specific gravity of about 1.00 to about 1.15.

29. A process according to any of Claims 19-28 wherein the cream base portion is homogenized prior to blending with the spirit portion.

30. A process according to any of Claims 19-20 wherein the cream base portion is homogenized after blending with the spirit portion.